# FASCICULE DE BREVET EUROPEEN

(11) **EP 1 242 258 B1**
(45) Date de publication et mention de la délivrance du brevet: **24.01.2007**
(21) Numéro de dépôt: 01982529.8
(22) Date de dépôt: 19.10.2001
(51) Int. Cl.: B60H 1/00

(54) **BO TIER DE GUIDAGE D'AIR**
LUFTLEITKASTEN
AIR GUIDE BOX

(30) Priorité: 20.10.2000 DE 10052135
(43) Date de publication de la demande: 25.09.2002
(73) Titulaire: Valeo Klimasysteme GmbH, 96476 Rodach (DE)
(72) Inventeur: ABOUCHAAR, Nicolas, 96476 Bad Rodach (DE)
(74) Mandataire: Lemaire, Marc
(86) Numéro de dépôt international: PCT/FR2001/003265
(87) Numéro de publication internationale: WO 2002/032704

(56) Documents cités:
- EP-A- 0 423 778
- FR-A- 2 771 967
- FR-A- 2 788 019
- GB-A- 2 168 786

## Description

La présente invention concerne un boîtier de guidage d'air et en particulier un boîtier de guidage d'air d'une installation de chauffage, climatisation et/ou ventilation d'un véhicule à moteur.

En général, dans un tel boîtier de guidage d'air, il est prévu au moins un dispositif de traitement de l'air qui peut être par exemple l'évaporateur d'une installation de climatisation, un corps de chauffe pouvant être alimenté en liquide de refroidissement du moteur, un appareil de chauffage électrique ou similaire. Afin de permettre un réglage spécifique à l'utilisateur de l'air devant être diffusé dans un habitacle de véhicule, une partie de l'air est habituellement guidée à travers le dispositif de traitement de l'air tandis qu'une autre partie peut être guidée devant le dispositif de traitement de l'air.

Ces dernières années, on a souhaité de plus en plus pouvoir disposer de plusieurs zones de climatisation différentes dans un véhicule, par exemple une zone de climatisation avant et une zone de climatisation arrière ou également une séparation entre les moitiés gauche et droite du véhicule, jusqu'à une combinaison des deux concepts susmentionnés, une climatisation dite en quatre zones. Afin de pouvoir mettre à disposition de telles zones de climatisation différentes dans un véhicule, il a été proposé de prévoir des voies de sortie séparées les unes des autres, par exemple une voie de sortie pour la partie avant et une voie de sortie pour la partie du fond ou arrière, la tendance générale étant que la climatisation de la partie avant doive avoir la priorité, afin de pouvoir garantir, au moins dans des situations extrêmes, comme en cas de buée sur le pare-brise, une climatisation suffisante. De ce fait, on s'est efforcé jusqu'à présent, dans une chambre de mélange dans laquelle l'air traité au moyen du dispositif de traitement de l'air et l'air non traité peuvent être mélangés, de prévoir un canal d'air bifurquant latéralement, qui puisse guider l'air devant le boîtier de guidage d'air proprement dit jusque dans la partie arrière du véhicule. Cette pièce rajoutée ne permet d'une part aucun réglage indépendant de la partie avant et de la partie arrière et requiert d'autre part un volume de construction supplémentaire, qui n'est pas disponible la plupart du temps dans les véhicules à moteur. Le problème du volume de construction limité est encore plus grave si l'on prévoit, comme la Demanderesse s'y efforce, un canal d'air chaud et un canal d'air froid respectifs pour la partie arrière, lesquels doivent ensuite tous deux être guidés devant la section de boîtier de guidage d'air pour la partie avant. Un boîtier de guidage d'air selon le préambule de la revendication 1 est décrit par le document FR-A-2 788 019.

Considérant ces faits, on a besoin d'un boîtier de guidage d'air amélioré, qui permette, pour un petit volume de construction nécessaire, d'une part d'alimenter au choix et de manière satisfaisante toutes les zones de climatisation ou seulement certaines zones de climatisation de manière suffisante en air traité et/ou non traité.

Conformément à l'invention, cet objectif est réalisé par un boîtier de guidage d'air ayant les caractéristiques de la revendication 1. Des perfectionnements préfrés sont définis dans les revendications dépendantes.

En particulier, l'invention propose un boîtier de guidage d'air, en particulier pour une installation de chauffage, climatisation et/ou ventilation d'un véhicule à moteur, dans lequel sont prévus au moins un dispositif de traitement de l'air, au moins .une voie d'air s'étendant à travers le dispositif de traitement de l'air, et au moins une voie d'air contournant le dispositif de traitement de l'air ainsi qu'au moins deux voies de sortie. L'invention prévoit dans ce contexte que les différentes voies débouchent dans un espace de telle manière qu'à chaque fois une voie de sortie se trouve pratiquement ou essentiellement en regard de l'une des autres voies, un dispositif mobile autour d'un axe étant disposé dans cet espace, lequel dispositif présente un élément de guidage d'air sous forme de canal et assure, dans des positions définies, un passage d'air pratiquement sans pertes de pression, entre deux voies en regard l'une de l'autre.

Autrement dit, l'invention permet d'utiliser un même et unique espace pour guider l'air dans deux directions différentes, en faisant pivoter le dispositif autour d'un axe par exemple central, ou décentré. Dans l'une des positions définies, une configuration d'un canal dans un autre est ainsi prévue de telle sorte que ceux-ci s'étendent essentiellement parallèlement et permettent ainsi un débit d'air maximal, par exemple dans le mode de dégivrage, tandis que dans une autre position définie, un passage l'un dans l'autre de deux courants d'air désaccouplés l'un de l'autre est possible, les deux directions d'écoulement pouvant être par exemple perpendiculaires l'une à l'autre. Dans le deuxième cas mentionné, un passage pratiquement exempt de pertes de pression est ainsi possible dans le canal intérieur, qui est défini par l'élément de guidage d'air en forme de canal, depuis par exemple le dispositif de traitement de l'air jusque par exemple la partie arrière du véhicule, tandis que l'alimentation en air frais pour la partie avant est soumise à une certaine perte de pression, causée par la présence du dispositif de guidage d'air en forme de canal transversalement à la direction d'écoulement vers les sorties avant de l'écoulement.

Du fait de la possibilité de définir deux voies d'écoulement pénétrant l'une dans l'autre, désaccouplées au moins partiellement l'une de l'autre, on peut obtenir des chemins particulièrement courts pour l'air, de sorte que les pertes de chaleur et/ou de pression peuvent encore être minimisées davantage.

Selon l'invention, il existe un engagement isolant dans au moins une position entre l'élément de guidage d'air en forme de canal et deux voies en regard l'une de l'autre. Ainsi, par exemple, une voie d'air continue peut être formée entre le dispositif de traitement de l'air et la partie du fond, de sorte qu'une quantité définie d'air traité puisse être diffusée dans la partie arrière indépendamment des réglages techniques de climatisation de la partie avant.

Dans la configuration dans laquelle les deux voies d'air se croisent, pour permettre d'utiliser l'air provenant à la fois de la voie d'air s'étendant à travers le dispositif de traitement de l'air ainsi que de la voie d'air contournant le dispositif de traitement de l'air, l'élément de guidage d'air en forme de canal est avantageusement pourvu d'une ouverture qui permet une bifurcation de l'air hors du passage soumis à une perte de pression.

L'élément de guidage d'air en forme de canal peut de préférence présenter au moins deux compartiments, dont au moins un peut être fermé, à l'exception des extrémités. Par exemple, il serait ainsi possible, que dans le cas où le dispositif de traitement de l'air serait un corps de chauffe, de réaliser une voie d'air chaud définie jusque dans la région du fond, laquelle est flanquée d'une autre voie, qui peut être alimentée en air plus froid à côté de l'air réchauffé, lequel est dérivé ainsi du passage soumis à une perte de pression.

Avantageusement, la section transversale de l'élément de guidage d'air en forme de canal est pratiquement constante, mais ne présente toutefois au moins aucun rétrécissement notoire qui pourrait conduire à une perte de pression.

Du point de vue de la technique des fluides, il peut être avantageux que l'élément de guidage d'air en forme de canal soit réalisé avec une courbure, de sorte qu'il puisse par exemple permettre, dans une position définie, une déviation de l'air vers le haut, et dans une autre position définie, une déviation de l'air vers le bas.

Dans la forme de réalisation préférée, le dispositif mobile autour d'un axe comprend des moyens pour bloquer au moins une voie, en particulier deux voies en regard l'une de l'autre dans au moins l'une des positions définies. De cette manière, il est par exemple possible d'empêcher que de l'air parvienne dans la partie du fond, ce qui est souhaitable en particulier dans les situations dans lesquelles la quantité d'air maximale est requise dans la partie avant.

De manière avantageuse, les moyens susmentionnés peuvent être réalisés d'une seule pièce avec l'élément de guidage d'air en forme de canal et former avec celui-ci par exemple un corps essentiellement cylindrique. Si l'on prévoit ainsi une double paroi au moins partielle, la qualité de l'écoulement du dispositif peut être améliorée pour des positions définies quelconques et des positions intermédiaires.

La largeur de l'élément de guidage d'air en forme de canal ou également du dispositif mobile autour de l'axe doit avantageusement être essentiellement égale dans la direction de l'axe à la largeur d'au moins une voie, en particulier d'une paire de voies en regard l'une de l'autre.

Finalement, on préfère que la largeur de l'élément de guidage d'air en forme de canal ou du dispositif pouvant tourner autour de l'axe dans la direction de l'axe corresponde essentiellement à entre 15% et 85%, en particulier entre 20% et 40% de la largeur d'une voie, en particulier d'une paire de voies en regard, la plage de 20% à 40% étant en particulier appropriée pour le cas où l'une des voies de sortie d'air mises en jeu est prévue pour l'espace du fond ou l'espace pour les pieds d'un véhicule. Dans d'autres applications, par exemple lorsque le dispositif mobile est disposé dans une chambre de mélange quelconque de l'installation telle que celle qui alimente les diffuseurs du tableau de bord et les diffuseurs au niveau du pare-brise, une autre plage de 50% à 70% peut être prévue. Dans ce contexte, il convient aussi de remarquer que la direction dans laquelle le dispositif peut être déplacé peut s'étendre à la fois essentiellement horizontalement, verticalement ou aussi en biais. En outre, il faut comprendre par le terme largeur également une somme de largeurs, par exemple lorsque l'on dispose de deux canaux espacés l'un de l'autre. Dans le cas de deux canaux espacés, ceux-ci pourraient se présenter en affleurement latéralement jusqu'aux bords des voies plus larges, une paroi du ou des canaux pouvant également être formée par le boîtier lui-même.

En conservant les rapports donnés, on peut garantir que suffisamment d'air puisse passer devant l'élément de guidage d'air en forme de canal dans au moins une position définie, pour alimenter la zone de climatisation, qui n'est pas alimentée en air sans perte de pression, qui pénètre à travers cet écoulement d'air par exemple perpendiculairement en intercalant l'élément de guidage d'air en forme de canal.

En résumé, on peut établir que l'invention permet au choix, pour des exigences d'espace minimales, que deux écoulements d'air puissent pénétrer l'un dans l'autre tandis que dans un autre cas, dans une autre position définie, l'on dispose de pratiquement toute la section transversale d'écoulement, comme si par exemple une conduite d'air pour la partie du fond n'était même plus présente.

Il convient de mentionner que l'enseignement selon l'invention peut également s'appliquer à plusieurs voies d'air se croisant en un emplacement ou en plusieurs, l'homme de l'art pouvant reconnaître aussi que, du point de vue de la technique des fluides, en aval dans le sens de l'écoulement, du dispositif pouvant tourner autour de l'axe, d'autres alimentations en air chaud et/ou froid sont possibles, par exemple aussi au moyen d'une vanne à papillon usuelle.

D'autres avantages et caractéristiques de l'invention résultent de la description suivante, indiquée uniquement à titre d'exemple, de quelques formes de réalisation préférées, et qui se réfère aux dessins annexés, dans lesquels :
- la figure 1: illustre une vue en coupe à travers un boîtier de guidage d'air selon une première forme de réalisation préférée.
- La figure 2: illustre une coupe à travers l'élément de guidage d'air en forme de canal illustré dans la figure 1.
- Les figures 3 et 4: illustrent des variantes de réalisation de celle illustrée dans la figure 1, l'élément de guidage d'air en forme de canal formant un canal fermé à l'exception des extrémités.
illustre une vue en coupe détaillée des formes de réalisation illustrées dans les figures 3 et 4, en particulier d'un espace 3 dans lequel débouchent les différentes voies d'air.
- Les figures 6 et 7: illustrent des représentations en perspective de la vue de détail illustrée dans la figure 5.
- La figure 8: illustre une coupe à travers l'élément de guidage d'air en forme de canal contenu dans la figure 3 ou la figure 4, et ce le long d'un plan I-I, comme indiqué dans la figure 5 et la figure 7.
- La figure 9: illustre un perfectionnement de la forme de réalisation illustrée dans la figure 3 avec des moyens qui permettent de bloquer deux voies d'air.
- La figure 10: illustre encore un autre perfectionnement de la forme de réalisation illustrée dans la figure 5, dans lequel une bifurcation est possible depuis le passage soumis à des pertes de pression.
- La figure 11: illustre une autre forme de réalisation préférée, qui combine les concepts des figures 5 et 6, aucun moyen de blocage des voies n'étant toutefois prévu.
- Les figures 12 et 13: illustrent finalement encore une autre forme de réalisation préférée dans deux positions définies différentes, du dispositif mobile autour de l'axe, lequel contient, en tant que corps essentiellement cylindrique formé d'une pièce, l'élément de guidage d'air en forme de canal ainsi que les moyens pour bloquer au moins une voie d'air.

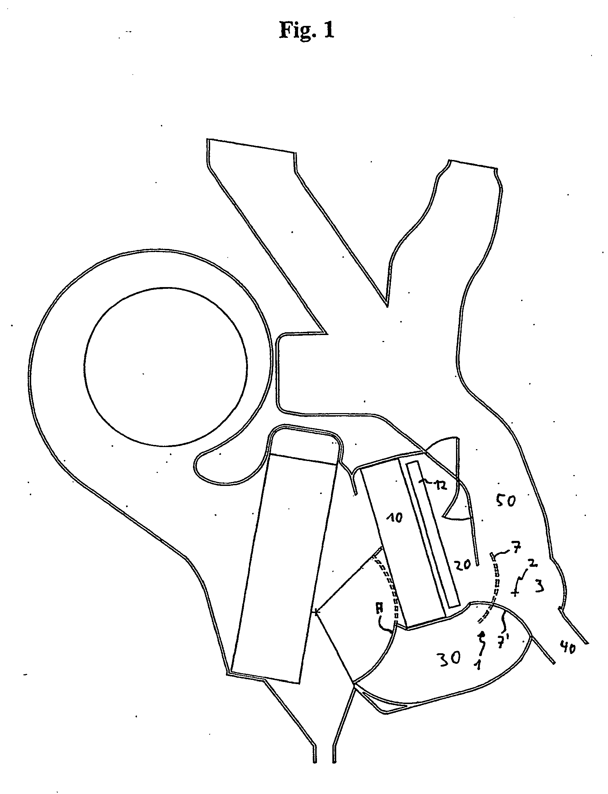

La figure 1 illustre, en vue en coupe partielle, un boîtier de guidage d'air en tant que forme de réalisation préférée de l'invention, qui fait partie d'un dispositif de ventilation-chauffage pour un véhicule à moteur. Dans le boîtier de guidage d'air, sont prévus, en tant que dispositif de traitement d'air, un échangeur de chaleur pour chauffage 10 qui peut être alimenté en liquide de refroidissement du moteur et un dispositif de chauffage électrique 12 monté en aval. L'air alimenté par une soufflante non illustrée peut, après un passage possible à travers un évaporateur - dans la mesure où une installation de climatisation est également prévue - passer au choix et de manière régulée par une vanne de commande A à travers le dispositif de traitement de l'air et emprunter une voie d'air 20 s'étendant à travers le dispositif de traitement de l'air, ou être guidé devant le dispositif de traitement de l'air, et ainsi emprunter une voie d'air 30 contournant le dispositif de traitement de l'air, un réglage proportionnel respectif étant aussi possible par la vanne de commande d'air A. Aux extrémités respectives se trouvant en aval de l'écoulement du point de vue de la technique des fluides, les voies 20 et 30 débouchent dans un espace 3. Partant de l'espace 3, une voie d'air 50 s'étend vers le haut jusqu'aux diffuseurs de la partie avant d'un véhicule à moteur, et un autre canal de sortie d'air 40 s'étend vers le bas et l'arrière vers les diffuseurs d'air de la partie du fond. Dans l'espace 3, dans lequel en principe les écoulements d'air sortant des voies 20 et 30 peuvent se mélanger et peuvent être diffusés vers les voies 40 ou 50, se trouve un dispositif 1 qui est monté mobile, dans le cas présent, rotatif, autour d'un axe 2.

Le dispositif 1 comprend un élément de guidage d'air en forme de canal qui comprend une paroi de canal 7 ainsi que deux parois latérales non illustrées dans cette vue. Comme illustré, le dispositif 1 peut être disposé dans deux positions définies, qui sont indiquées par la paroi de canal 7 pour une position et la paroi de canal 7' pour l'autre position. Evidemment, le dispositif 1 pourrait aussi former deux canaux latéraux ou plusieurs canaux répartis.

Conformément à un premier mode de fonctionnement autant d'air que possible doit pouvoir passer sans pertes de pression de la voie 30 à la voie 50, ce pourquoi l'élément de guidage d'air en forme de canal et en particulier dans l'illustration, la paroi de canal 7 s'étend essentiellement parallèlement à la direction de l'écoulement. Du fait de la courbure de la paroi de canal 7, on tient compte du profil d'écoulement existant, de sorte qu'à l'exception de l'épaisseur du matériau de l'élément de guidage d'air en forme de canal, aucune résistance à l'écoulement et donc aucune perte de pression n'a lieu. Dans la position indiquée par le numéro de référence 7, un passage de la voie 20 vers la voie 40 est au contraire bloqué ou soumis à des pertes de pression.

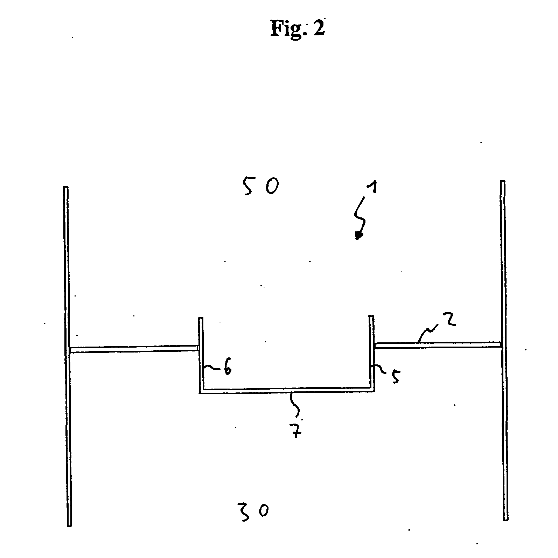

Dans une autre position définie de l'élément de guidage d'air réalisé en forme de canal, la paroi du canal s'étend dans la position indiquée par le numéro de référence 7', de sorte qu'un passage du canal 20 vers le canal 40 puisse s'effectuer pratiquement sans perte de pression. Dans cet agencement, en dépit d'une perte de pression existant du fait de la présente du canal formé, suffisamment d'air peut s'écouler de la voie 30 vers la voie 50, car dans la direction de l'axe 2, la largeur de l'élément de guidage d'air en forme de canal est inférieure à la largeur de la voie 30 ainsi que de la voie 50, comme il ressort plus clairement de la figure 2, qui reproduit une coupe perpendiculairement au plan du dessin de la figure 1 à travers l'élément de guidage d'air en forme de canal.

Il convient de reconnaître que l'élément de guidage d'air en forme de canal, monté sur l'axe 2, est ouvert dans une direction, à savoir vers le haut, et comprend outre la paroi de canal 7 des parois latérales 5 et 6, où, pour la forme de réalisation illustrée, suffisamment d'espace est disponible latéralement à côté des parois 5 et 6 pour que l'air puisse passer de la voie 30 à la voie 50, afin de pouvoir assurer la climatisation de la partie avant, indépendamment du mode de fonctionnement. Dans une forme de réalisation alternative non illustrée, un canal ouvert vers le bas pourrait aussi être prévu de manière correspondante. Il convient de remarquer, en ce qui concerne l'axe illustré 2, que bien qu'il soit illustré en position centrale, il pourrait aussi s'étendre dans une position excentrée, et aussi dans une autre orientation, par exemple verticale au lieu d'horizontale. Dans la forme de réalisation illustrée, la largeur de l'élément de guidage d'air en forme de canal correspond approximativement à 30% de la largeur des voies 30 ou 50, tandis qu'elle correspond essentiellement à celle des voies 20 et 40. Suivant une représentation différente, la forme de réalisation illustrée dans les figures 1 et 2 permet un agencement parallèle par exemple d'un canal dans un autre coaxial, entre les voies 30 et 50 d'une part, l'élément de guidage d'air en forme de canal s'étendant d'autre part dans une autre position définie 7' transversalement au passage entre la voie 30 et la voie 50, et formant un passage exempt de pertes de pression de la voie 20 vers la voie 40.

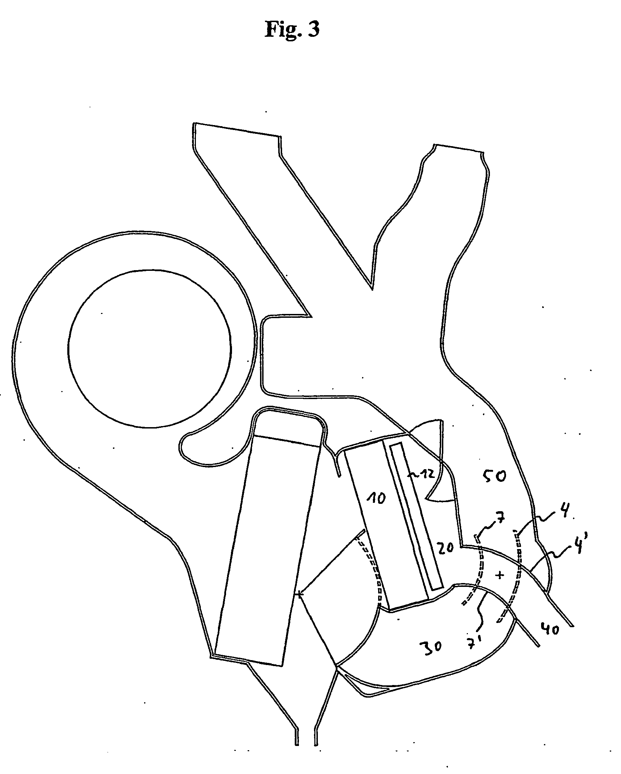

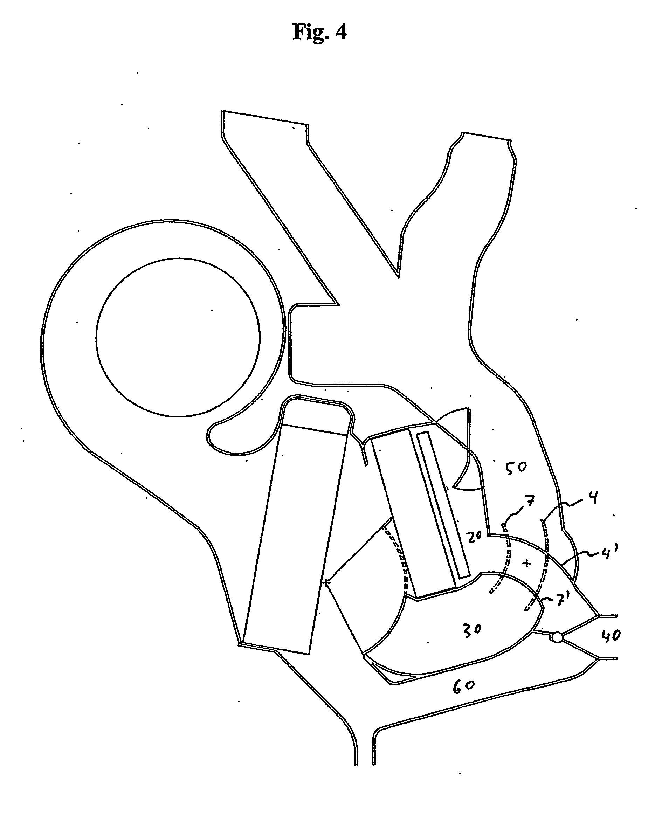

Dans les figures 3 et 4 sont illustrés des perfectionnements, selon l'invention, respectifs dans une vue similaire à la figure 1, les éléments correspondants étant pourvus de numéros de référence correspondants. Dans les formes de réalisation illustrées dans les figures 3 et 4, l'élément de guidage d'air en forme de canal comprend, en plus de la paroi de canal 7 et des parois latérales 5 et 6, une autre paroi de canal 4, de sorte qu'un canal fermé à l'exception des extrémités soit défini, lequel vient en prise hermétiquement dans une position avec la voie 20 et/ou la voie 40, afin de former un chemin d'écoulement continu depuis le dispositif de traitement de l'air 10, 12 vers l'espace pour les pieds dans la partie du fond, la partie avant pouvant aussi être climatisée, car l'air provenant de la voie 30 peut s'écouler vers l'avant au niveau du canal formé vers la voie 50. Si, au lieu de la climatisation ou du chauffage de la partie du fond, on souhaite ou on requiert un passage maximal d'air dans la partie avant, le dispositif 1 peut facilement être pivoté, de sorte que les parois 4, 5, 6, 7 du canal soient disposées essentiellement parallèlement à la direction d'écoulement entre les voies 30 et 50, de sorte qu'une section transversale pratiquement sans rétrécissement soit établie entre la voie 30 et la voie 50.

La forme de réalisation illustrée dans la figure 4 se distingue de celle de la figure 3 de manière déterminante par le fait que le canal de sortie d'air 40 peut être alimenté en outre par le biais d'un canal d'air frais 60. Si ainsi une transition pratiquement exempte de perte de pression a lieu de la voie d'air 20 à la voie d'air 40 pour l'air traité par la chaleur, un réglage de la température peut être obtenu en y mélangeant de l'air frais par le biais du canal 60. Bien que cela ne soit pas illustré, il est possible, dans la forme de réalisation illustrée dans la figure 4, comme dans d'autres formes de réalisation de l'invention, de prévoir des vannes anti-retour, en particulier pour empêcher par exemple que de l'air frais ne parvienne de la voie d'air 30 et/ou 60 jusque dans la voie d'écoulement d'air chaud 20.

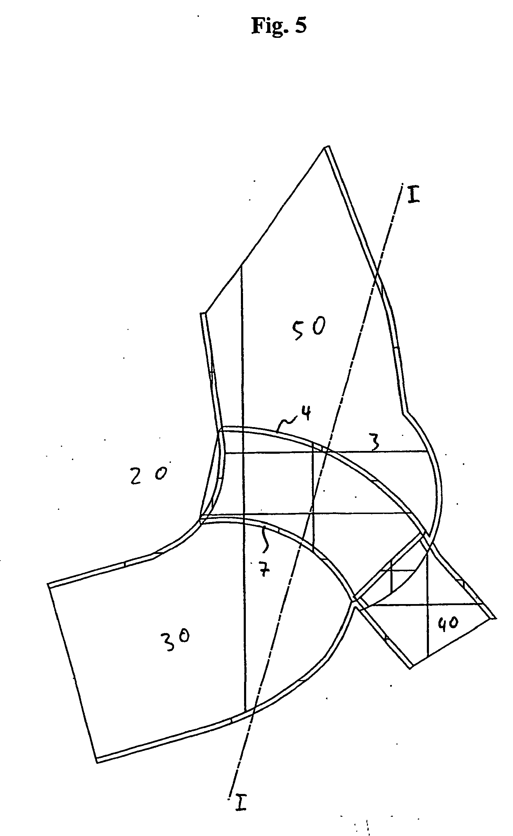

La figure 5 illustre une vue de détail relativement à l'espace 3, dans lequel débouchent la voie d'alimentation en air chaud 20, la voie d'alimentation en air frais 30 ainsi que les voies d'évacuation d'air 40 et 50, pour chaque zone de climatisation différente, cette vue de détail correspondant à la représentation des figures 3 et 4.

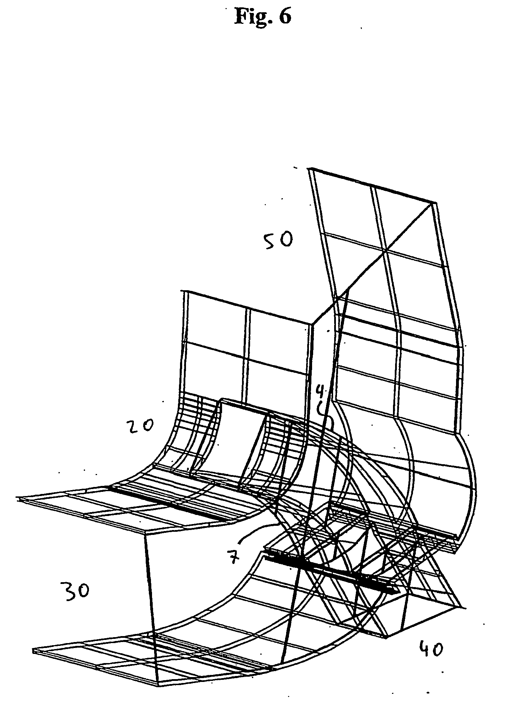

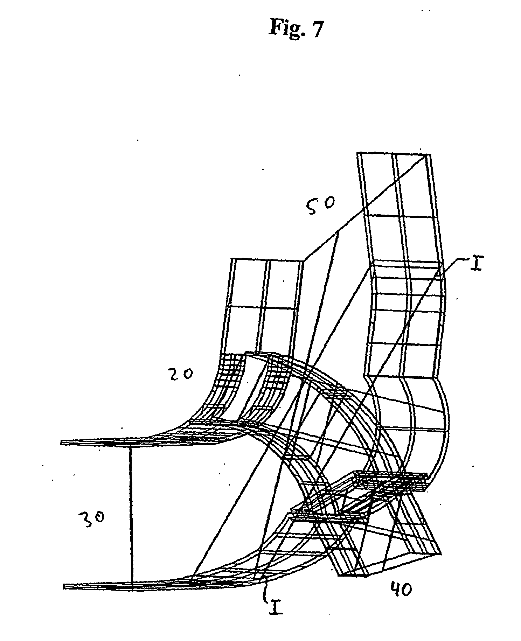

Pour mettre en évidence les passages d'air définis pénétrant l'un dans l'autre entre les voies d'air différentes, la coupe de détail illustrée dans la figure 5 est illustrée en perspective dans les figures 6 et 7, un passage pratiquement exempt de perte de pression depuis la voie 20 jusqu'à la voie 40 et un passage soumis à une perte de pression depuis la voie 30 jusqu'à la voie 50 étant illustrés en tant que position définie. Comme on peut le reconnaître à partir des vues en perspective, la perte de pression lors du passage de la voie 30 vers la voie 50 résulte essentiellement de la présence des parois de canal 7 et 4. On peut reconnaître en outre, à partir de l'illustration, que la configuration choisie pour le canal est choisie volontairement avec une coupe essentiellement rectangulaire, de sorte que d'autres surfaces en section transversale pourraient être facilement représentées avec de faibles modifications, comme par exemple ronde, elliptique ou polygonale, l'effet de la paroi de canal 7 en tant que surface d'incidence et donc en tant que cause de la réduction de pression, pouvant être encore davantage réduit.

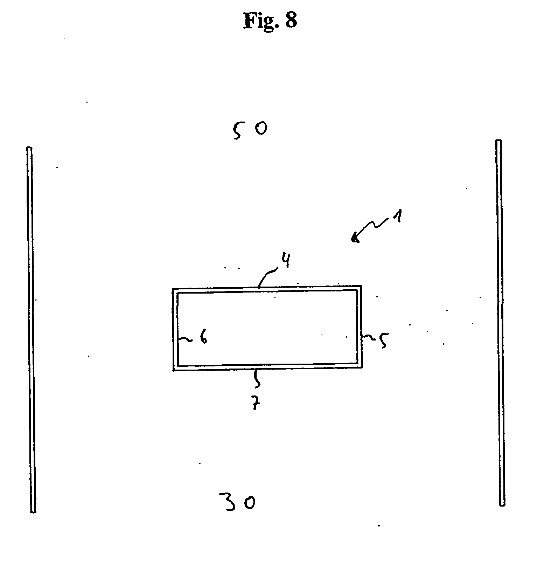

La figure 8 illustre, comme dans la figure 2, une coupe partielle à travers les formes de réalisation illustrées dans les figures 3 et 4, et ce suivant un plan de coupe I-I, comme indiqué dans les vues de détail des figures 5 et 7.

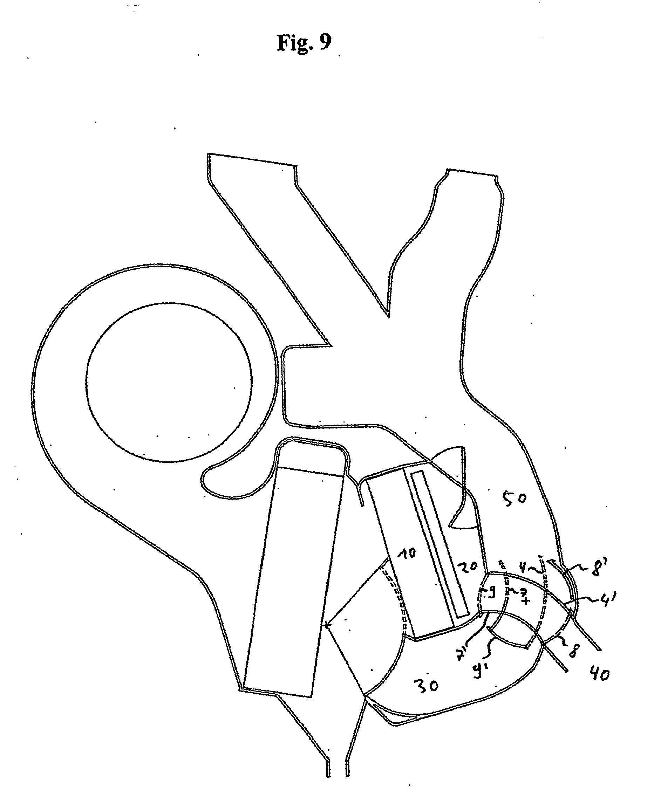

La figure 9 illustre encore une autre forme de réalisation préférée qui est similaire aux formes décrites ci-avant. Dans cette forme de réalisation, des moyens supplémentaires 8, 9 sont toutefois prévus, lesquels peuvent bloquer et libérer les canaux 40 ou 20. Le mouvement de ces moyens avec l'élément de guidage d'air en forme de canal 4, 5, 6, 7 peut être commandé de manière accouplée avec ou indépendante. Comme dans les formes de réalisation précédentes, les positions respectives définies sont d'une part indiquées par des numéros de référence sans prime, et d'autre part par des numéros de référence avec une prime. Grâce aux moyens de fermeture 8, 9, une fuite vers la partie du fond peut être évitée dans le cas où une évacuation maximale d'air dans la partie avant est souhaitée ou nécessaire. Les moyens de fermeture 8 et 9 pourraient aussi être configurés de manière commandable séparément, et peuvent empêcher une fuite d'air chaud. En outre, il est possible de prévoir, bien que cela ne soit pas illustré, un dispositif de rappel, par exemple dans le canal, afin d'empêcher un écoulement d'air froid depuis l'arrière vers l'avant, ou du bas vers le haut par le biais de la voie 20.

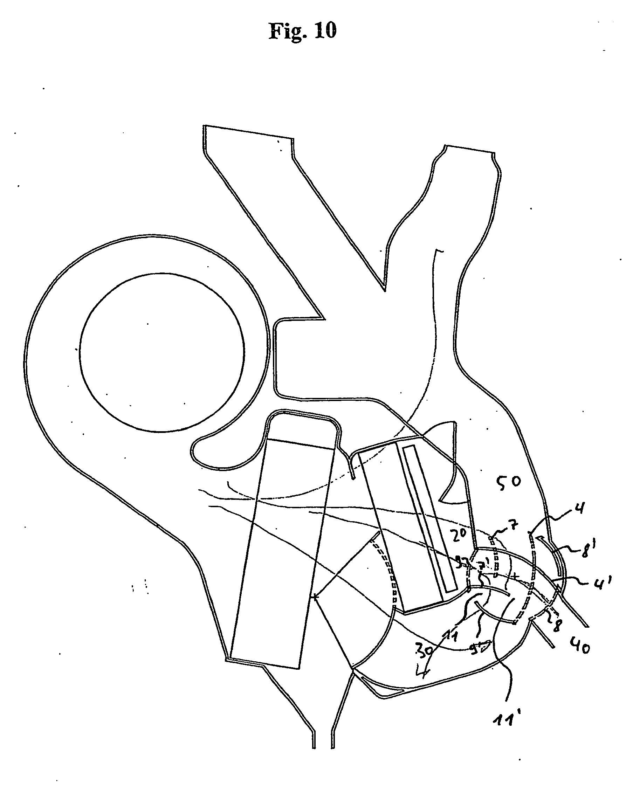

La figure 10 illustre une autre forme de réalisation préférée du boîtier de guidage d'air selon l'invention, la paroi 7 montée en amont du point de vue de la technique des fluides de l'élément de guidage d'air en forme de canal étant pourvue d'une ouverture 11, qui permet de contourner ou de dévier une partie de l'écoulement de la voie 30 vers la voie 40, afin de mettre à disposition dans le cas de la réalisation décrite une température légèrement inférieure dans la région du fond. Autrement, le fonctionnement de la forme de réalisation illustrée correspond à celui de la figure 5.

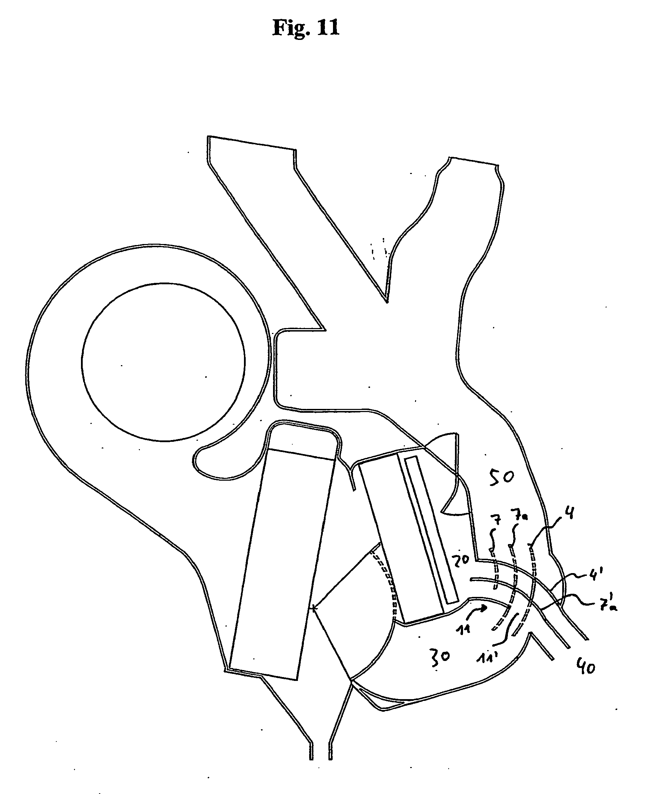

La forme de réalisation illustrée dans la figure 11 est essentiellement une combinaison des formes de réalisation illustrées dans les figures 9 et 10, toutefois les moyens de blocage des voies ont été omis, bien que ceux-ci puissent également être rajoutés. Dans la forme de réalisation illustrée ici, l'élément de guidage d'air en forme de canal forme deux canaux isolés l'un de l'autre, dont un canal est fermé à l'exception de ses extrémités, tandis que l'autre canal dispose d'une ouverture 11 qui permet une alimentation en air frais jusque dans la région du fond. Comme dans les formes de réalisation décrites précédemment, le dispositif 1 peut aussi être positionné de telle sorte qu'il existe un passage d'air pratiquement sans obstruction de la voie 30 à la voie 50. Il convient de mentionner que dans la position dans laquelle l'air est guidé depuis le dispositif de traitement de l'air 10, 12 vers la voie 40 de la région du fond, la séparation entre le canal fermé et le canal à moitié ouvert peut être poursuivie dans la région de la voie 40, de sorte qu'un mélange et un réglage sur place puisse être réalisé avec des moyens connus.

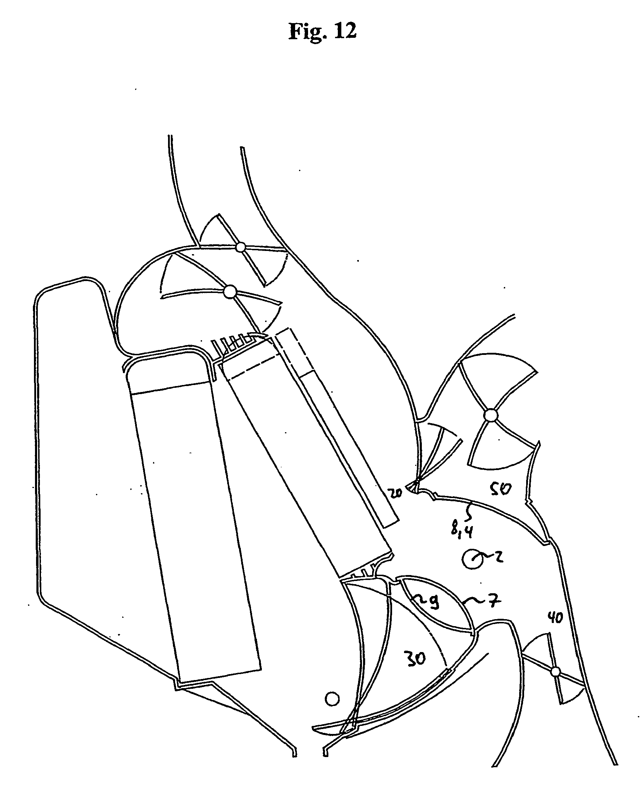

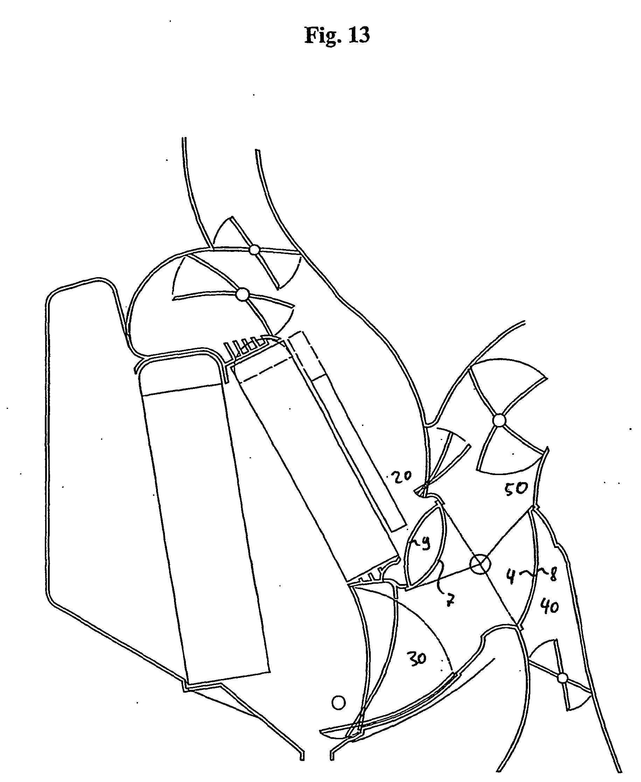

Les figures 12 et 13 illustrent une autre forme de réalisation du boîtier de guidage d'air selon l'invention, dans laquelle les moyens 8, 9 pour bloquer la voie 20 et/ou la voie 40 sont réalisés d'une pièce avec l'élément de guidage d'air en forme de canal et définissent un corps essentiellement cylindrique en tant que dispositif 1. Le fonctionnement correspond essentiellement à celui des formes de réalisation précédentes. En particulier, la position illustrée dans la figure 12 permet de guider l'air dans un canal depuis le dispositif de traitement de l'air jusque dans la région du fond, l'air pouvant passer de la voie 30 vers la voie 50 devant le dispositif 1, et ce uniquement au niveau d'un côté ou, comme dans les formes de réalisation décrites précédemment, des deux côté de celui-ci.

Dans l'autre position définie, illustrée dans la figure 3, les voies 20, 30 sont bloquées par les moyens 8, 9, la section transversale totale étant essentiellement libérée pour la climatisation de la partie avant, à savoir à la fois à travers le canal et aussi latéralement devant celui ci, c'est-à-dire parallèlement au plan du dessin devant le dispositif 1.

Bien que la présente invention ait été décrite précédemment totalement en référence à des formes de réalisation spécifiques, l'homme de l'art reconnaîtra que diverses variations et modifications sont possibles dans le cadre des revendications. En particulier, l'homme de l'art reconnaîtra que des caractéristiques particulières d'une forme de réalisation peuvent être combinées au choix avec d'autres caractéristiques d'autres formes de réalisation. En particulier, l'élément de guidage d'air pourrait également constituer un ou deux canaux latéraux, auquel cas une paroi pourrait être réalisée par application étanche avec le boîtier lui-même.

## Revendications

1. Boîtier de guidage d'air, en particulier pour une installation de chauffage, climatisation et/ou ventilation d'un véhicule à moteur, dans lequel sont prévus au moins un dispositif de traitement de l'air (10, 12), au moins une voie d'air (20) s'étendant à travers le dispositif de traitement de l'air (10, 12), au moins une voie d'air (30) contournant le dispositif de traitement de l'air (10, 12) et au moins deux voies d'air de sortie (40, 50), lesdites voies d'air (20, 30, 40, 50) débouchant dans un espace (3) de telle manière qu'à chaque fois une voie d'air de sortie (40, 50) se trouve essentiellement en regard de l'une des autres voies d'air (20, 30), un dispositif (1) mobile autour d'un axe (2) disposé dans cet espace(3), **caractérisé en ce que** le dispositif présente un élément de guidage d'air sous forme de canal (4, 5, 6, 7) assurant des passages d'air entre les voies d'air en regard les unes des autres (20, 40 ; 30, 50) dans deux directions différentes et venant en prise hermétiquement dans une position avec deux voies d'air en regard l'une de l'autre (20, 40 ; 30, 50).

2. Boîtier de guidage d'air selon la revendication 1, dans lequel l'élément de guidage d'air en forme de canal (4, 5, 6, 7) présente une ouverture (11), qui permet une bifurcation de l'air hors d'un passage d'air soumis à une perte de pression.

3. Boîtier de guidage d'air selon l'une quelconque des revendications 1 à 2, dans lequel l'élément de guidage d'air en forme de canal (4, 5, 6, 7) présente au moins deux compartiments, dont au moins un est fermé, à l'exception des extrémités.

4. Boîtier de guidage d'air selon l'une quelconque des revendications précédentes, **caractérisé en ce que** la section transversale de l'élément de guidage d'air en forme de canal (4, 5, 6, 7) est essentiellement constante.

5. Boîtier de guidage d'air selon l'une quelconque des revendications précédentes, **caractérisé en ce que** l'élément de guidage d'air en forme de canal (4, 5, 6, 7) est courbé.

6. Boîtier de guidage d'air selon l'une quelconque des revendications précédentes, **caractérisé en ce que** le dispositif (1) comprend des moyens (8, 9) pour bloquer au moins une voie d'air (20, 40), en particulier deux voies d'air en regard l'une de l'autre (20, 40).

7. Boîtier de guidage d'air selon la revendication 6, dans lequel les moyens (8, 9) sont formés d'une pièce avec l'élément de guidage d'air en forme de canal (4, 5, 6, 7).

8. Boîtier de guidage d'air selon l'une quelconque des revendications précédentes, dans lequel la largeur de l'élément de guidage d'air en forme de canal (4, 5, 6, 7) dans la direction de l'axe (2) est essentiellement égale à la largeur d'une voie d'air (20, 40) en particulier à la largeur d'une paire de voies d'air en regard l'une de l'autre (20, 40).

9. Boîtier de guidage d'air selon l'une quelconque des revendications précédentes, dans lequel la largeur de l'élément de guidage d'air en forme de canal (4, 5, 6, 7) dans la direction de l'axe (2) correspond essentiellement à entre 15% et 85%, en particulier entre 20% et 40% de la largeur d'une voie (20, 40), en particulier d'une paire de voies en regard l'une de l'autre (20, 40).

## Claims

1. Air guide box, in particular for a heating, air conditioning and/or ventilating system of a motor vehicle, provided with at least one device for treating the air (10, 12), at least one air channel (20) extending through the air treatment device (10, 12), at least one air channel (30) bypassing the air treatment device (10, 12) and at least two air outlet channels (40, 50), said air channels (20, 30, 40, 50) leading to a space (3) so that each time an air outlet channel (40, 50) is essentially opposite one of the other air channels (20, 30), a device (1) mobile about an axis (2) is arranged in this space (3),
**characterised in that** the device has an air guide element in the form of a channel (4, 5, 6, 7) ensuring the passage of air between the air channels opposite one another (20, 40; 30, 50) in two different directions and coming into hermetic contact in a position with two air channels opposite one another (20, 40; 30, 50).

2. Air guide box according to claim 1, in which the air guide element in the form of a channel (4, 5, 6, 7) has an opening (11), which enables the air to be branched outside of an air passage subjected to a pressure loss.

3. Air guide box according to either one of claims 1 to 2, in which the air guide element in the form of a channel (4, 5, 6, 7) has at least two compartments, of which at least one is closed, with the exception of the ends.

4. Air guide box according to any one of the previous claims, **characterised in that** the cross-section of the air guide element in the form of a channel (4, 5, 6, 7) is essentially constant.

5. Air guide box according to any one of the previous claims, **characterised in that** the air guide element in the form of a channel (4, 5, 6, 7) is curved.

6. Air guide box according to any one of the previous claims, **characterised in that** the device (1) includes means (8, 9) for blocking at least one air channel (20, 40), in particular two air channels opposite one another (20, 40).

7. Air guide box according to claim 6, **characterised in that** the means (8, 9) are formed as a single part with the air guide element in the form of a channel (4, 5, 6, 7).

8. Air guide box according to any one of the previous claims, in which the width of the air guide element in the form of a channel (4, 5, 6, 7) in the direction of the axis (2) is essentially equal to the width of an air channel (20, 40), in particular to the width of a pair of air channels opposite one another (20, 40).

9. Air guide box according to any one of the previous claims, in which the width of the air guide element in the form of a channel (4, 5, 6, 7) in the direction of the axis (2) corresponds essentially to between 15% and 85%, in particular between 20% and 40% of the width or a channel (20, 40), in particular a pair of channels opposite one another (20, 40).

## Patentansprüche

1. Luftführungsgehäuse insbesondere für eine Heiz-, Klima- und/oder Lüftungsanlage eines Motorfahrzeugs, in dem mindestens eine Vorrichtung zur Aufbereitung der Luft (10, 12) vorgesehen ist, mindestens ein Luftkanal (20), der durch die Vorrichtung zur Aufbereitung der Luft (10, 12) verläuft, mindestens einen Luftkanal (30), der die Vorrichtung zur Aufbereitung der Luft (10, 12) umgibt und mindestens zwei Luftaustrittkanäle (40, 50), wobei die besagten Luftkanäle (20, 30, 40, 50) in einen Zwischenraum (3) münden und zwar so, dass jedes Mal ein Luftaustrittkanal (40, 50) sich im wesentlichen gegenüber einem der anderen Luftkanäle (20, 30) befindet, wobei eine bewegliche Vorrichtung (1) um eine Achse (2) herum in diesem Zwischenraum (3) angeordnet ist,
**dadurch gekennzeichnet, dass** die Vorrichtung ein Luftführungselement in Form eines Kanals (4, 5, 6, 7) aufweist, der Luftdurchgänge zwischen den Luftkanälen gegenüber denen der anderen (20, 40; 30, 50) in zwei unterschiedlichen Richtungen garantiert und hermetisch in eine Position mit zwei Luftkanälen eingreift, die einander gegenüber liegen (20, 40; 30, 50).

2. Luftführungsgehäuse gemäß Anspruch 1, in dem das Luftführungselement in Form eines Kanals (4, 5, 6, 7) eine Öffnung (11) aufweist, die eine Abzweigung der Luft außerhalb eines Luftdurchgangs ermöglicht, der einem Druckverlust unterliegt.

3. Luftführungsgehäuse gemäß einem der Ansprüche 1 bis 2, in dem das Luftführungselement in Form eines Kanals (4, 5, 6, 7) mindestens zwei Kammern aufweist, von denen mindestens eine geschlossen ist, mit Ausnahme der Enden.

4. Luftführungsgehäuse gemäß einem der vorherigen Ansprüche, **dadurch gekennzeichnet, dass** der Querschnitt des Luftführungselementes in Form eines Kanals (4, 5, 6, 7) im wesentlichen konstant ist.

5. Luftführungsgehäuse gemäß einem der vorherigen Ansprüche, **dadurch gekennzeichnet, dass** das Luftführungselement in Form eines Kanals (4, 5, 6, 7) gewölbt ist.

6. Luftführungsgehäuse gemäß einem der vorherigen Ansprüche, **dadurch gekennzeichnet, dass** das die Vorrichtung (1) Mittel (8, 9) zur Blockierung von mindestens einem Luftkanal (20, 40), insbesondere zwei Luftkanäle, die einander gegenüber liegen (20, 40), umfasst.

7. Luftführungsgehäuse gemäß Anspruch 6, in dem die Mittel (8, 9) und das Luftführungselement in Form eines Kanals (4, 5, 6, 7) aus einem Stück gebildet sind.

8. Luftführungsgehäuse gemäß einem der vorherigen Ansprüche, bei dem die Breite des Luftführungselementes in Form eines Kanals (4, 5, 6, 7) in der Richtung der Achse (2) im wesentlichen der Breite eines Luftkanals (20, 40) entspricht, insbesondere der Breite eines Paares von Luftkanälen, die einander gegenüber liegen (20, 40).

9. Luftführungsgehäuse gemäß einem der vorherigen Ansprüche, bei dem die Breite des Luftführungselementes in Form eines Kanals (4, 5, 6, 7) in der Richtung der Achse (2) im wesentlichen zwischen 15% und 85%, insbesondere zwischen 20% und 40% der Breite eines Kanals (20, 40) entspricht, insbesondere einem Paar von Kanälen, die einander gegenüber liegen (20, 40).
